# EUROPÄISCHE PATENTSCHRIFT

(11) **EP 2 994 384 B1**
(45) Veröffentlichungstag und Bekanntmachung des Hinweises auf die Patenterteilung: **05.06.2019**
(21) Anmeldenummer: 14725358.7
(22) Anmeldetag: 25.04.2014
(51) Int. Cl.: B64D 11/06

(54) **FLUGZEUGSITZANORDNUNG**
ARRANGEMENT OF AIRCRAFT SEATS
AGENCEMENT DE SIEGES D'AVION

(30) Priorität: 07.05.2013 DE 102013007731; 11.07.2013 DE 102013011514
(43) Veröffentlichungstag der Anmeldung: 16.03.2016
(73) Patentinhaber: Recaro Aircraft Seating GmbH & Co. KG, 74523 Schwäbisch Hall (DE)
(72) Erfinder: CLUCAS, Daniel, William, London N1 6JQ (GB); ERSAN, Ali, London E2 OQA (GB)
(74) Vertreter: Daub, Thomas
(86) Internationale Anmeldenummer: PCT/EP2014/001109
(87) Internationale Veröffentlichungsnummer: WO 2014/180538

(56) Entgegenhaltungen:
- WO-A1-2012/140515
- WO-A1-2013/063599
- GB-A- 907 472
- US-S1- D 696 524

## Beschreibung

Die Erfindung betrifft einen Flugzeugsitz mit einem eine Sitzfläche und eine Rückenlehne umfassenden Sitzbereich, der sich mit einer Blickrichtung von der Rückenlehne nach vorne über die Sitzfläche entlang einer Sitzlängsachse erstreckt, und mit einer seitlich des Sitzbereichs angeordneten Konsole, in deren Innenraum ein entgegen der Blickrichtung zur Lehenrückseite offener Fußraum ausgebildet ist, der sich mit einer Einführrichtung nach vorne entlang einer Fußraumlängsachse erstreckt. Die Erfindung betrifft weiter eine Flugzeugsitzanordnung mit einem ersten derartigen Flugzeugsitz und einem zweiten derartigen Flugzeugsitz, wobei der zweite Flugzeugsitz entlang einer Stapelachse, dem ersten Flugzeugsitz nachfolgend, derart angeordnet ist, dass der Fußraum in der Konsole des ersten Flugzeugsitzes von einem Passagier des Sitzbereichs des zweiten Flugzeugsitzes nutzbar ist. Des Weiteren betrifft die Erfindung eine Flugzeugsitzreihung mit einer Anzahl derartiger Sitzanordnungen. Ferner betrifft die Erfindung eine Sitzkonfiguration mit einer Anzahl von derartigen Sitzreihungen.

Ein Flugzeugsitz der vorgenannten Art sowie eine Sitzanordnung, eine Sitzreihung und eine Sitzkonfiguration mit Flugzeugsitzen der eingangs genannten Art sind beispielsweise aus der EP 1 648 767 B1 bekannt. Der Sitzbereich eines Flugzeugsitzes kann insbesondere unter Erweiterung der Sitzfläche in eine Liegefläche von einer aufrechten Sitzposition in eine waagerechte Liegeposition verfahren werden. In einer Flugzeugsitzanordnung ist entlang einer Stapelachse hinter einem ersten Flugzeugsitz ein zweiter Flugzeugsitz quer zur Stapelachse versetzt derart angeordnet, dass der Fußraum in der Konsole des ersten Flugzeugsitzes von einem Passagier auf der Sitzfläche des zweiten Flugzeugsitzes nutzbar ist.

Die Sitzfläche des zweiten Flugzeugsitzes ist in Stapelrichtung hinter der Konsole des ersten Flugzeugsitzes und die Konsole des zweiten Flugzeugsitzes hinter dem Sitzbereich des ersten Flugzeugsitzes angeordnet. Nach Umwandeln des Sitzbereichs des zweiten Flugzeugsitzes in eine horizontale Liegeposition erstreckt sich ein Teilbereich der gebildeten Liegefläche des zweiten Flugzeugsitzes in den Fußraum der Konsole des ersten Flugzeugsitzes hinein.

Bei einem Flugzeugsitz entsprechend der EP 1 648 767 B1 wird Raum in einer seitlich neben dem Sitzbereich angeordneten Konsole als Fußraum für einen Passagier der Sitzfläche eines nachgeordneten weiteren Flugzeugsitzes genutzt. Insbesondere erstreckt sich in Liegeposition des Sitzbereiches die Liegefläche des hinteren Flugzeugsitzes in den Fußraum der Konsole des vorderen Flugzeugsitzes hinein. Hierdurch kann entlang der Stapelachse die Dichte von Flugzeugsitzen hierdurch erhöht werden, wobei der Komfort für den einzelnen Passagier jedoch erhalten bleibt. Der Beinbereich eines Passagiers eines hinteren Flugzeugsitzes oder die Liegefläche eines hinteren Flugzeugsitzes überlappt seitlich bzw. quer zur Stapelachse mit dem Sitzbereich eines vorderen Flugzeugsitzes.

Eine ähnliche Ausgestaltung eines Flugzeugsitzes und eine ähnliche Anordnung bzw. Reihung von Flugzeugsitzen ist auch aus der GB 907472 A bekannt. Dort sind die Flugzeugsitze einschließlich der Konsolen jeweils zur Stapelrichtung geneigt angeordnet. Flugzeugsitze und Konsolen sind entlang der Stapelrichtung jeweils versetzt zueinander angeordnet.

Weiter ist aus der WO 2012/140515 A1 eine Anordnung von Flugzeugsitzen bekannt, wobei zwei hintereinander angeordnete Flugzeugsitze, die jeweils einen Sitzbereich und eine neben dem Sitzbereich angeordnete Konsole aufweisen, in deren Inneren jeweils ein nach hinten geöffneter Fußraum angeordnet ist.

Weiter ist aus der WO 2010/100500 A2 eine Anordnung von Flugzeugsitzen bekannt, wobei eine Fußauflage seitlich der Sitzfläche eines bezüglich einer Stapelrichtung vorderen Flugzeugsitzes von einem Passagier der Sitzfläche eines hinteren Flugzeugsitzes genutzt werden kann bzw. bei einer Liegefunktionalität Teil der Liegefläche des hinteren Flugzeugsitzes wird. Die Flugzeugsitze sind dabei jeweils zur Stapelachse parallel abgewinkelt bzw. geneigt.

Des Weiteren wird in der WO 2013/063599 A1 eine Anordnung von Flugzeugsitzen vorgeschlagen, wobei sich entlang einer Stapelrichtung der für einen Passagier der Sitzfläche eines hinteren Flugzeugsitzes nutzbare Fußraum oder eine umfunktionalisierte Liegefläche des Sitzbereiches eines hinteren Flugzeugsitzes bis seitlich neben den Sitzbereich eines vorderen Flugzeugsitzes erstreckt. Dabei bilden die Sitzlängsachsen zweier entlang der Stapelachse hintereinander angeordneter Flugzeugsitze einen in Blickrichtung nach vorne geöffneten Winkel.

Ein jeweils vorderer und ein jeweils hinterer Flugzeugsitz sind zu einer Einheit verbunden. Eine Fußauflage an einer seitlichen Konsole eines vorderen ersten Flugzeugsitzes ist von einem Passagier der Sitzfläche eines entlang der Stapelachse dritten hinteren Flugzeugsitzes nutzbar.

Schließlich ist aus der WO 2014/049362 A1, die einen Stand der Technik gemäß Artikel 54 (3) EPÜ darstellt, eine weitere Flugzeugsitzanordnung bekannt, bei der zwei nebeneinander angeordnete Flugzeugsitze derart zueinander gewinkelte Sitzlängsachsen aufweisen, dass sich für den Passagier des nicht am Gang befindlichen Flugzeugsitzes ein Durchgangsbereich ergibt, der zum Gang führt.

Die Dichte und damit die mögliche absolute Anzahl von Flugzeugsitzen in einem Passagierraum eines Flugzeugs, insbesondere auch im Bereich gehobener Sitz- oder Beförderungsklassen, spielt eine entscheidende Rolle bei der Wirtschaftlichkeitsbetrachtung des Flugzeugeinsatzes. Für die Passagiere sollte durch die Erhöhung der Anzahl von Flugzeugsitzen pro Fläche jedoch der Komfort nicht leiden.

Der durch die technischen Merkmale des unabhängigen Vorrichtungsanspruchs 1 definierten Erfindung liegt daher die Aufgabe zugrunde, einen Flugzeugsitz der eingangs genannten Art dahingehend zu verbessern, dass eine möglichst dichte Anordnung von Flugzeugsitzen mit einem möglichst großen Komfort für den Passagier gegeben ist. Als weitere Aufgaben liegen der Erfindung eine entsprechend verbesserte Flugzeugsitzanordnung, eine entsprechend verbesserte Flugzeugsitzreihung und eine entsprechend verbesserte Flugzeugsitzkonfiguration zugrunde.

Die erstgenannte Aufgabe wird für einen Flugzeugsitz mit einem eine Sitzfläche und eine Rückenlehne umfassenden Sitzbereich, der sich mit einer Blickrichtung von der Rückenlehne nach vorne über die Sitzfläche entlang einer Sitzlängsachse erstreckt, und mit einer seitlich des Sitzbereichs angeordneten Konsole, in deren Innenraum ein entgegen der Blickrichtung zur Linienrückseite offener Fußraum ausgebildet ist, der sich mit einer Einführrichtung nach vorne entlang einer Fußraumlängsachse erstreckt, erfindungsgemäß dadurch gelöst, dass der Sitzbereich und der Fußraum gewinkelt zueinander angeordnet sind.

Die Erfindung geht dabei in einem ersten Schritt von der Tatsache aus, dass sich in einer Anordnung von Flugzeugsitzen entlang einer Stapelachse die Dichte der Flugzeugsitze dadurch erhöhen lässt, dass die Flugzeugsitze jeweils zur Stapelachse geneigt angeordnet sind. Die Projektion der Sitzlänge auf die Stapelachse wird verkürzt. Die für einen Passagier grundsätzlich zur Verfügung stehende Länge wird durch diese Maßnahme nicht verkürzt.

In einem zweiten Schritt geht die Erfindung von der Tatsache aus, dass sich die Dichte der Flugzeugsitze in einer Anordnung weiter dadurch erhöhen lässt, dass sich der Fußraum eines entlang der Stapelachse hinteren Flugzeugsitzes seitlich mit dem Sitzbereich eines vorderen Flugzeugsitzes überlappt. Die für einen Passagier grundsätzlich zur Verfügung stehende Länge wird auch durch diese Maßnahme nicht verkürzt. Insbesondere kann unter Komforterhalt auch eine Liegefläche zur Verfügung gestellt werden, die sich beispielsweise durch Umfunktionalisieren des Sitzbereichs ergibt, die sich jeweils von einem hinteren Flugzeugsitz bis seitlich neben den Sitzbereich eines vorderen Flugzeugsitzes erstreckt.

In einem dritten Schritt schließlich erkennt die Erfindung, dass sich in einer Anordnung von Flugzeugsitzen entlang einer Stapelachse eine weitere Option zur Erhöhung der Dichte der Flugzeugsitze ergibt, wenn der Sitzbereich eines vorderen Flugzeugsitzes und der Fußraum eines hinteren Flugzeugsitzes zueinander gewinkelt angeordnet sind. Auch hier wird entlang der Stapelachse die Dichte der Flugzeugsitze erhöht, da für jeden Flugzeugsitz und für jede Konsole die Projektion der jeweiligen Länge auf die Stapelachse verkürzt werden kann, woraus sich entlang der Stapelache eine dichtere "Packung" von Flugzeugsitzen ergibt. Durch die entgegengesetzte Abwinklung von Sitzbereich und Konsole bzw. Fußraum resultiert jedoch bei einer Sitzanordnung entlang einer Stapelachse eine jeweils wechselnde Neigung der Sitzbereiche und Konsolen in abfolgenden Flugzeugsitzen, so dass der Sitzbereich eines hinteren Flugzeugsitzes auf die Konsole des vorderen Flugzeugsitzes ausgerichtet ist. Während bei einem bloßen Parallelversatz von zu einer Stapelachse abgewinkelten Flugzeugsitzen jedoch die Länge des seitlichen Überlappbereichs zwischen aufeinander folgenden Flugzeugsitzen nicht unabhängig vom Neigungswinkel gewählt werden kann, ist dies bei einer wechselseitigen Abwinklung von aufeinander folgenden Flugzeugsitzen nicht der Fall. Der angegebene Flugzeugsitz ermöglicht somit eine weitere Erhöhung der Dichte bzw. der Anzahl der möglichen Flugzeugsitze pro Fläche.

Der für einen Passagier eines hintern Flugzeugsitzes nutzbare Fußraum ist durch eine bezüglich der Blickrichtung seitliche Konsole am Sitzbereich eines vorderen Flugzeugsitzes gebildet. Für den Passagier des Flugzeugsitzes wird dadurch in Blickrichtung vor der Konsole ein Durchgangsbereich ermöglicht, der unabhängig von der Umfunktionalisierung einer Sitzfläche zu einer Liegefläche erhalten bleibt. Dies trägt zu einem hohen Sitzkomfort bei.

Die Sitzlängsachse und die Fußraumlängsachse entsprechen jeweils nicht notwendiger Weise der Lage einer Winkelhalbierenden oder Symmetrieachse in Bezug auf die jeweils seitlichen Begrenzungswände des Sitzbereichs bzw. des Fußraums. Die genaue Richtung und Lage ist hierbei durch die jeweilige Geometrie des Sitzbereichs bzw. des Fußraums gegeben. Die Sitzlängsachse und die Fußraumlängsachse erstrecken sich jedoch stets längs der Blickrichtung und nicht quer hierzu. Insbesondere können jedoch die Sitzlängsachse und die Fußraumlängsachse einer Spiegelachse entsprechen, zu der der Sitzbereich bzw. der Fußraum oder die Konsole spiegelsymmetrisch ausgestaltet sind.

Es hat sich gezeigt, dass sich mit den Flugzeugsitzen entsprechend den vorgenannten Merkmalen der Abstand zwischen den Flugzeugsitzen entlang der Stapelachse auf unter 117 cm (46 Zoll), insbesondere bis 104 cm (41 Zoll), verringern lässt, ohne dass es zu einer bedeutenden Komfortbeeinträchtigung für die Passagiere kommt.

Bilden die Sitzlängsachse und die Fußraumlängsachse zueinander einen in Blickrichtung nach hinten geöffneten Winkel, so liegt der Schnittpunkt der Sitzlängsachsen des hinteren und des vorderen Flugzeugsitzes im Bereich des vorderen Flugzeugsitzes, was gewisse Komfortnachteile mit sich bringt. Beispielsweise resultiert hieraus in Blickrichtung nach vorne eine zunehmende seitliche Einengung des Sitzbereichs durch den nach innen einlaufenden Fußraum, was auch durch eine entsprechende Gestaltung der Konsole nicht aufgefangen werden kann. Bevorzugt bilden daher die Sitzlängsachse und die Fußraumlängsachse zueinander einen in Blickrichtung nach vorne geöffneten Winkel. In diesem Fall liegt der Schnittpunkt der Sitzlängsachsen eines vorderen Flugzeugsitzes und eines hinteren Flugzeugsitzes im Bereich des hinteren Flugzeugsitzes. Der Sitzbereich kann hierdurch nach vorne durch eine seitlich nach außen verlaufende Konsole erweitert werden. Konsole oder Fußraum und Sitzbereich bilden in diesem Fall einen sich nach vorne öffnenden Keil.

Vorteilhafterweise erstreckt sich der Fußraum in Blickrichtung nach vorne über die Rückenlehne hinaus und endet quer zur Sitzlängsachse seitlich der Sitzfläche. Unter Erhalt eines möglichst großen Durchgangsbereiches in Blickrichtung vor der Konsole wird hierdurch eine möglichst dichte Anordnung von Flugzeugsitzen entlang einer Stapelachse ermöglicht.

In einer weiter bevorzugten Ausführungsvariante ist der Fußraum der Konsole hin zum Sitzbereich durch eine Innenwand begrenzt, die mit der Sitzlängsachse einen in Blickrichtung nach vorne geöffneten Winkel bildet. Durch eine solche Innenwand ist Bezug auf die Einführrichtung des Fußraums genommen, so dass sich die für einen Passagier gefühlte Komfortzone im Fußbereich nicht verkleinert. Zweckmäßigerweise begrenzt die Innenwand des Fußraums zumindest abschnittsweise zugleich den Sitzbereich zum Fußraum hin. Durch die nach vorne geöffnete Abwinklung der Innenwand gegenüber der Sitzlängsachse ergibt sich hierdurch für einen Passagier des Flugzeugsitzes im Sitzbereich eine seitlich vergrößerte Komfortzone.

Der durch die zur Sitzlängsachse nach vorne abgewinkelte Innenwand des Fußraums ermöglichte Zusatzraum im Sitzbereich wird vorteilhafterweise zur Anordnung eines Staufachs herangezogen. Bevorzugt erstreckt sich dieses Staufach seitlich neben der Sitzfläche nach unten, während der Raum oberhalb des Staufachs zur Vergrößerung der Armfreiheit bis zur Innenwand des Fußraums freibleibt.

Weiter vorteilhaft erstreckt sich die Innenwand mit einem Teilabschnitt in vertikaler Richtung nach oben über die Sitzfläche hinaus, wobei an diesem Teilbereich eine Armauflage angeordnet ist. Somit ist oberhalb der Sitzfläche ein Bereich mit großer Armfreiheit und einer ergonomischen Anordnung der Armlehne geschaffen.

In einer weiter bevorzugten Ausgestaltung ist der Fußraum der Konsole auf der dem Sitzbereich abgewandten Seite durch eine Außenwand begrenzt, die mit der Sitzlängsachse einen in Blickrichtung nach vorne geöffneten Winkel bildet. Hierdurch nimmt auch die Außenwand Bezug auf die Einführrichtung des Fußraums. Für einen den Fußraum nutzenden Passagier verkleinert sich die im Fußraum gefühlte Komfortzone durch eine derart ausgerichtete Wand nicht. Die Außenwand an sich stellt kein Einführhindernis im Fußraum dar.

Zweckmäßigerweise laufen die Außenwand und die Innenwand, den Fußraum verjüngend, in Blickrichtung nach vorne aufeinander zu. Unter Erhalt eines möglichst großen Komforts im Fußraum wird hierdurch auf den benötigten Bauraum der Konsole Bezug genommen. Die Dimension der Konsole quer zur Sitzlängsachse kann verringert werden, wenn die Außenwand der Konsole in Blickrichtung nach vorne auf die Innenwand der Konsole zuläuft.

Vorteilhafterweise ist der Sitzbereich entlang einer Ausfahrrichtung von einer aufrechten Sitzposition in eine waagerechte Liegeposition verfahrbar. In der Liegeposition bildet die Sitzfläche insbesondere zumindest einen Teilbereich der entstehenden Liegefläche. Weitere Teilbereiche der Liegefläche können durch die umgeklappte Rückenlehne oder durch eine umgeklappte Beinauflage gebildet sein. Die Umfunktionalisierung der Sitzfläche in eine Liegefläche ist insbesondere für Flugzeugsitze der gehobenen Passagierklassen erwünscht, so dass der Passagier beispielsweise auf Langstreckenflügen eine bequeme Schlafposition einnehmen kann. Um zumindest am Fußende die Liegefläche eines hinteren Flugzeugsitzes in den durch die Konsole eines vorderen Flugzeugsitzes gebildeten Fußraum einführen zu können, zeigt - bezogen auf jeweils denselben Flugzeugsitz - die Liegefläche zweckmäßigerweise zumindest an ihrem Fußende zur Querschnittsfläche des Fußraums eine Gleitspiegelsymmetrie. Insbesondere betrifft diese Gleitspiegelsymmetrie zumindest das Fußende einer umklappbaren Beinauflage, sofern diese vorhanden ist.

Bevorzugt ist in Blickrichtung hinter der Rückenlehne des Flugzeugsitzes eine im Wesentlichen vertikale Rückwand vorgesehen, die sich insbesondere bogenförmig mit einem Brückenbereich seitlich über den Fußraum erstreckt. Durch eine derartige Rückwand wird für einen jeweiligen Passagier des Flugzeugsitzes eine Privatsphäre geschaffen. Insbesondere ist für einen Passagier eines vorderen Flugzeugsitzes eine direkte Sicht auf den Fußbereich eines hinteren Flugzeugsitzes verhindert. Durch eine im Wesentlichen bogenförmige Ausgestaltung der Rückwand wird ein sehr ästhetischer Gesamteindruck des Flugzeugsitzes erreicht. Weiter nimmt ein Passagier eines hinteren Flugzeugsitzes die derart ausgestaltete Rückwand eines vorderen Flugzeugsitzes als Begrenzungswand seiner Privatsphäre wahr. Insbesondere wird der Fußraum als Teil der eigenen Privatsphäre und nicht als Teil der Konsole eines vorderen Flugzeugsitzes gesehen.

Der sich über die Konsole erstreckende Brückenbereich der Rückwand kann bevorzugt weiter für die Anordnung von Nutz-, Bedien- oder Informationselementen für einen hinteren Passagier genutzt werden. Zweckmäßigerweise ist im Brückenbereich der Rückwand oberhalb des Fußraums eine schwenkbare Anzeigeeinheit eingelassen. Vorteilhafterweise füllt die Anzeigeeinheit in eingeschwenkter Position die Fläche des Brückenbereichs zum überwiegenden Teil, also mehr als 50% der Fläche des Brückenbereiches, aus. In diesem Fall ist die Fläche des Brückenbereichs überwiegend zur Schaffung eines großen Anzeigebereichs genutzt, was generell von Passagieren geschätzt ist.

Zweckmäßigerweise ist im Fußraum der Konsole eine Fußauflage angeordnet. In aufrechter Position des Sitzbereichs eines hinteren Flugzeugsitzes kann diese Fußauflage von einem Passagier eines hinteren Flugzeugsitzes bequem zum Aufstellen der Füße genutzt werden. Bei einem Umfunktionalisieren der Sitzfläche in eine Liegefläche koppelt die erweitere Sitzfläche des hinteren Flugzeugsitzes vorteilhafterweise unmittelbar an die Fußauflage des vorderen Flugzeugsitzes an. Hierdurch wird unter Einschluss der Fußauflage eine durchgehende Liegefläche geschaffen.

In einer weiter bevorzugten Ausgestaltung des Flugzeugsitzes sind der Sitzbereich und die Konsole über einen Grundrahmen zu einer Baueinheit verbunden. Auch kann die Konsole über die Rückwand mit dem Sitzbereich gekoppelt sein. Insbesondere können die Rückwand des Sitzbereichs und die Konsole in Teilbereichen oder vollständig als ein ein- oder mehrstückiges Schalenelement gefertigt sein. Zum Verbringen des Flugzeugsitzes in den Passagierraum eines Flugzeugs bietet es sich insbesondere an, den Sitzbereich, die Konsole und die Rückwand als Module zu fertigen. Zur Montage des Flugzeugsitzes können dann die Module in den Passagierraum verbracht und dort zu der Einheit des Flugzeugsitzes montiert bzw. miteinander verbunden.

Weiter wird die eingangs gestellte Aufgabe erfindungsgemäß durch eine Flugzeugsitzanordnung gelöst, die einen ersten Flugzeugsitz der vorbeschriebenen Art und einen zweiten Flugzeugsitz der vorbeschriebenen Art umfasst, wobei im ersten Flugzeugsitz und im zweiten Flugzeugsitz die Positionen des Sitzbereichs und der Konsole getauscht sind, und wobei der zweite Flugzeugsitz entlang einer Stapelachse, dem ersten Flugzeugsitz nachfolgend, derart angeordnet ist, dass die Sitzlängsachse des Sitzbereichs des zweiten Flugzeugsitzes auf den Fußraum des ersten Flugzeugsitzes ausgerichtet ist.

Mit anderen Worten wechseln sich entlang der Stapelachse die Positionen des Sitzbereichs und der Konsole ab. Der Sitzbereich des zweiten Flugzeugsitzes ist bezogen auf die Stapelachse hinter der Konsole des ersten Flugzeugsitzes angeordnet. Die Konsole des zweiten Flugzeugsitzes befindet sich bezogen auf die Stapelachse hinter dem Sitzbereich des ersten Flugzeugsitzes. Die Sitzlängsachse des Sitzbereiches des zweiten Flugzeugsitzes ist auf den Fußraum des ersten Flugzeugsitzes ausgerichtet. Ein Passagier des zweiten Flugzeugsitzes kann bequem den Fußraum in der Konsole des ersten Flugzeugsitzes nutzen. Vorteilhaft sind die Sitzbereiche und die Konsolen des ersten und des zweiten Flugzeugsitzes bezüglich ihrer Positionen jeweils mit einer Spiegelsymmetrie getauscht. Mit anderen Worten lassen sich der Sitzbereich und die Konsole der ersten und der zweiten Flugzeugsitzanordnung durch eine Gleitspiegeloperation ineinander überführen. Von der Spiegelsymmetrie sind Detailelemente, wie z. B. Befestigungselemente, Zierelemente oder dergleichen, sowie fertigungsbedingte tolerierte Abweichungen in den Abmessungen nicht erfasst. Die Stapelachse ist durch eine Mitten- oder Symmetrieachse bestimmt, die in Stapelrichtung durch die ersten und durch die zweiten Flugzeugsitze hindurch verläuft.

Durch die angegebene Flugzeugsitzanordnung ergibt sich für den Passagier ein komfortabler Sitzbereich mit einer großen Beinfreiheit. Der Fußraum erstreckt sich seitlich neben den Sitzbereich des ersten Flugzeugsitzes in dessen Konsole hinein. Durch die gewinkelte Anordnung von Sitzbereich und Konsole lässt sich eine hohe Dichte von Flugzeugsitzen bei hohem Komfort erzielen. Hierzu werden entlang der Stapelachse jeweils mehrere der vorbeschriebenen Sitzanordnungen platziert.

Ist für den Sitzbereich des Flugzeugsitzes eine Liegefunktionalität vorgesehen, so muss die Ausfahrrichtung des Sitzbereiches des zweiten Flugzeugsitzes nicht notwendiger Weise mit der Einführrichtung des Fußraums des ersten Flugzeugsitzes zusammenfallen. Auch muss die Sitzlängsachse des Sitzbereiches des zweiten Flugzeugsitzes nicht notwendiger Weise mit der Fußraumlängsachse des Fußraums des ersten Flugzeugsitzes zusammenfallen. Die jeweiligen Richtungen und Achsen können insbesondere zueinander auch einen Winkel aufweisen. Vorteilhafterweise fällt jedoch die Ausfahrrichtung des Sitzbereichs des zweiten Flugzeugsitzes in eine Liegeposition mit der Einführrichtung des Fußraumes des ersten Flugzeugsitzes zusammen. Hierdurch kann sich die zu einer Liegefläche erweiterte Sitzfläche des zweiten Flugzeugsitzes problemlos in den Fußraum der Konsole des ersten Flugzeugsitzes hinein erstrecken, wobei die Geometrie der erweiterten Sitzfläche des zweiten Flugzeugsitzes im Wesentlichen der Geometrie des Fußraums des ersten Flugzeugsitzes entspricht. Hinsichtlich der Liegefläche müssen keine Abstriche gemacht werden.

Vorteilhafterweise bilden die Sitzlängsachsen der Sitzbereiche des ersten Flugzeugsitzes und des zweiten Flugzeugsitzes jeweils mit der Stapelachse einen in Blickrichtung nach vorne geöffneten Winkel. Neben den bereits geschilderten Vorteilen einer derartigen Abwinkelung nach vorne wird generell durch eine Abwinklung des Sitzbereichs gegenüber der Stapelachse die Projektion der Sitzlänge auf die Stapelachse verkürzt und hierdurch die mögliche Dichte von Flugzeugsitzen entlang der Stapelachse vergrößert. Gleiches gilt, wenn die Fußraumlängsachsen der Fußräume des ersten Flugzeugsitzes und des zweiten Flugzeugsitzes jeweils mit der Stapelachse einen in Blickrichtung nach vorne geöffneten Winkel bilden.

In einer zweckmäßigen Ausgestaltung bilden sowohl die Sitzlängsachsen als auch die Fußraumlängsachsen beider Flugzeugsitze zur Stapelachse jeweils einen in Blickrichtung nach vorne geöffneten Winkel. Durch diese Anordnung kann entlang der Stapelachse die größtmögliche Dichte an Flugzeugsitzen erreicht werden.

In einer weiter vorteilhaften Ausführungsvariante verläuft die den Fußraum des ersten Flugzeugsitzes begrenzende Innenwand parallel zur Ausfahrrichtung des Sitzbereiches des zweiten Flugzeugsitzes. Entlang der Innenkontur des Sitzbereichs kann insofern die Liegefläche parallel zur Sitzfläche nach vorne fortgesetzt werden. In diesem Fall ist beispielsweise die Innenkontur einer umklappbaren Beinauflage parallel zur Innenwand des ersten Flugzeugsitzes ausgebildet. Auch dies stellt ein Komfortmerkmal dar.

Die eingangs gestellte Aufgabe wird des Weiteren erfindungsgemäß durch eine Flugzeugsitzreihung gelöst, wobei eine erste vorbeschriebene Flugzeugsitzanordnung und eine zweite vorbeschriebene Flugzeugsitzanordnung quer zur Stapelachse benachbart angeordnet sind.

Eine derartige Flugzeugsitzreihung weist bei hoher Packungsdichte insbesondere den Vorteil auf, dass für jeden Passagier in Blickrichtung vor der Konsole des jeweiligen Flugzeugsitzes ein Durchgangsbereich ermöglicht ist, der von der Liegefunktionalität des Sitzbereichs nicht betroffen ist. Insbesondere ergibt sich hierdurch auch jeweils für einen "inneren" Passagier der Sitzreihung ein freier Durchgangsbereich in einen seitlichen Gang und zwar unabhängig davon, ob der Passagier selbst oder ein anderer Passagier den Sitzbereich in eine Liegeposition umfunktionalisiert hat.

Bevorzugt sind in der Flugzeugsitzreihung die einander entsprechenden Flugzeugsitze der ersten und der zweiten Flugzeugsitzanordnung jeweils auf gleicher Stapelhöhe angeordnet. Dies ist aber nicht zwingend erforderlich. Es kann auch ein lateraler Versatz der ersten und der zweiten Flugzeugsitzanordnung entlang der Stapelachse gegeben sein.

Die vorgenannte Flugzeugsitzreihung bietet sich insbesondere zur Ausgestaltung einer Mittenreihe in einem Flugzeug an, wobei jeweils zwei Flugzeugsitze quer zur Stapelachse nebeneinander angeordnet sind.

In einer ersten Variante sind in den quer zur Stapelachse jeweils benachbarten Flugzeugsitzen der ersten Flugzeugsitzanordnung und der zweiten Flugzeugsitzanordnung die Positionen des Sitzbereiches und der Konsole getauscht. In einer zweiten Variante sind in den quer zur Stapelachse jeweils benachbarten Flugzeugsitzen der ersten Flugzeugsitzanordnung und der zweiten Flugzeugsitzanordnung die Positionen des Sitzbereiches und der Konsole gleich.

In der ersten Variante sind die Sitzbereiche und die Konsolen benachbarter Flugzeugsitze entlang der Stapelachse abwechselnd unmittelbar benachbart oder voneinander beabstandet. Die erste Variante bietet insofern zusätzlich den Vorteil eines Fluges für zwei Personen in einer gemeinsamen Privatsphäre. In der zweiten Variante sind die Sitzbereiche aller benachbarten Flugzeugsitze jeweils durch eine dazwischen angeordnete Konsole getrennt. Insofern eignet sich diese Variante insbesondere für Einzelpersonen. Jeder Passagier hat seine eigene Privatsphäre.

Die eingangs gestellte Aufgabe wird ferner erfindungsgemäß gelöst durch eine Flugzeugsitzkonfiguration mit einer Mittenreihe, umfassend eine Anzahl von entlang einer Stapelachse angeordneten Flugzeugsitzreihungen der vorbeschriebenen Art, eine quer zur Stapelachse der Mittenreihe versetzte erste seitliche Reihe, umfassend eine Anzahl von entlang einer Stapelachse angeordneten Flugzeugsitzanordnungen der vorbeschriebenen Art, und eine quer zur Stapelachse der Mittenreihe versetzte zweite seitliche Reihe, umfassend eine Anzahl von entlang einer Stapelachse angeordneten Flugzeugsitzanordnungen der vorbeschriebenen Art.

Eine derartige Flugzeugsitzkonfiguration bietet sich zur Ausgestaltung von drei Sitzreihen entlang einer Flugzeuglängsachse an, wobei die beiden seitlichen Reihen jeweils an der Außenseite des Flugzeugs und die Mittenreihe mittig im Passagierraum angeordnet sind. Zwischen den einzelnen Reihen können jeweils Gänge vorgesehen sein.

Ausführungsbeispiele der Erfindung werden anhand einer Zeichnung näher erläutert. Dabei zeigen:
- FIG 1: in Aufsicht einen Flugzeugsitz mit einem Sitzbereich und einem in einer seitlichen Konsole gebildeten Fußraum, wobei die Sitzlängsachse und die Fußraumlängsachse zueinander abgewinkelt sind,
- FIG 2: den Flugzeugsitz entsprechend FIG 1 in einer perspektivischen Ansicht von vorne,
- FIG 3: den Flugzeugsitz entsprechend FIG 1 in einer perspektivischen Ansicht von hinten,
- FIG 4: in Aufsicht eine Flugzeugsitzanordnung mit einem ersten Flugzeugsitz gemäß FIG 1 und einem entlang einer Stapelachse dahinter angeordneten spiegelsymmetrischen zweiten Flugzeugsitz,
- FIG 5: die Flugzeugsitzanordnung gemäß FIG 4 in einer perspektivischen Ansicht,
- FIG 6: schematisch eine erste Flugzeugsitzkonfiguration mit Flugzeugsitzanordnungen gemäß FIG 4,
- FIG 7: schematisch eine zweite Flugzeugsitzkonfiguration mit Flugzeugsitzanordnung gemäß FIG 4 und
- FIG 8: schematisch eine dritte Flugzeugsitzkonfiguration mit Flugzeugsitzanordnungen entsprechend FIG 4.

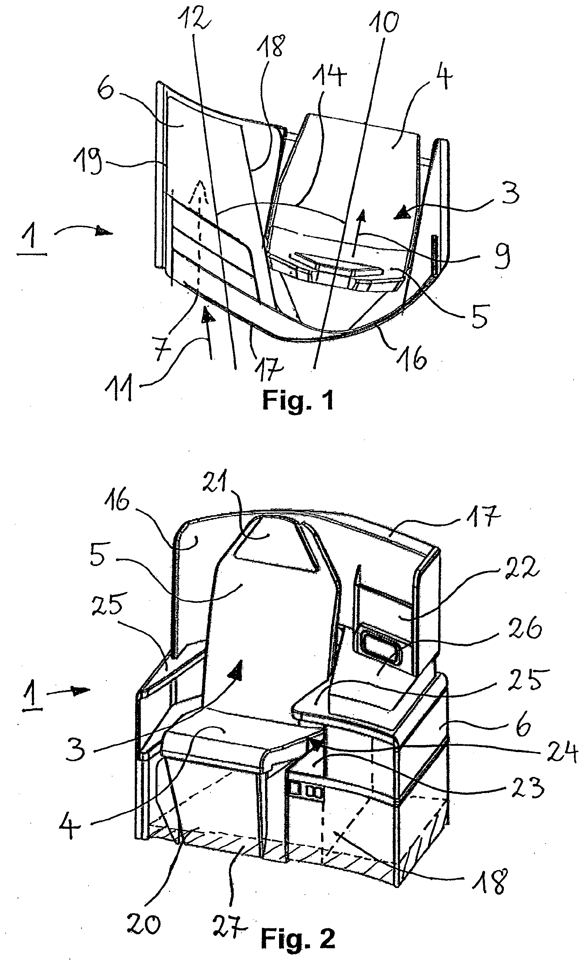

In FIG 1 ist in einer Aufsicht ein Flugzeugsitz 1 mit einem Sitzbereich 3, umfassend eine Sitzfläche 4 und eine Rückenlehne 5, und mit einer seitlich angeordneten Konsole 6 dargestellt, in deren. Innenraum ein Fußraum 7 für einen hinteren Passagier gebildet ist.

Durch den Sitzbereich 3 und insbesondere durch die Rückenlehne 5 ist für den Flugzeugsitz 1 eine Blickrichtung 9 definiert. In die Blickrichtung 9 blickt ein in aufrechter Position sitzender Passagier des Flugzeugsitzes 1 mit gerader Kopfhaltung. Weiter ist durch den Sitzbereich 3 des Flugzeugsitzes 1 eine Sitzlängsachse 10 vorgegeben, die vorliegend als die Symmetrieachse des Sitzbereichs 3 eingezeichnet ist. Gewöhnlich verläuft die Sitzlängsachse 10 in etwa parallel zur Blickrichtung 9 nach vorne von der Rückenlehne 5 in aufrechter Position weg.

Durch den Fußraum 7, der im Inneren der Konsole 6 gebildet ist, ist ferner eine Einführrichtung 11 vorgegeben. Diese Einführrichtung 11 entspricht derjenigen Richtung, entlang derer ein hinterer Passagier seine Füße bequem in den Fußraum 7 eines vorderen Flugzeugsitzes 1 ausstreckt. Ferner ist durch die Gestaltung des Fußraums 7, insbesondere durch die ihn seitlich begrenzenden Wände, auch eine Fußraumlängsachse 12 vorgegeben. Vorliegend ist die Fußraumlängsache 12 als Winkelhalbierende zwischen den beiden seitlichen Begrenzungswänden des Fußraums 7 eingezeichnet. Dies ist jedoch nicht zwingend der Fall. Die Fußraumlängsachse 12 erstreckt sich längs der durch den Sitzbereich 3 definierten Blickrichtung 9 und nicht quer hierzu.

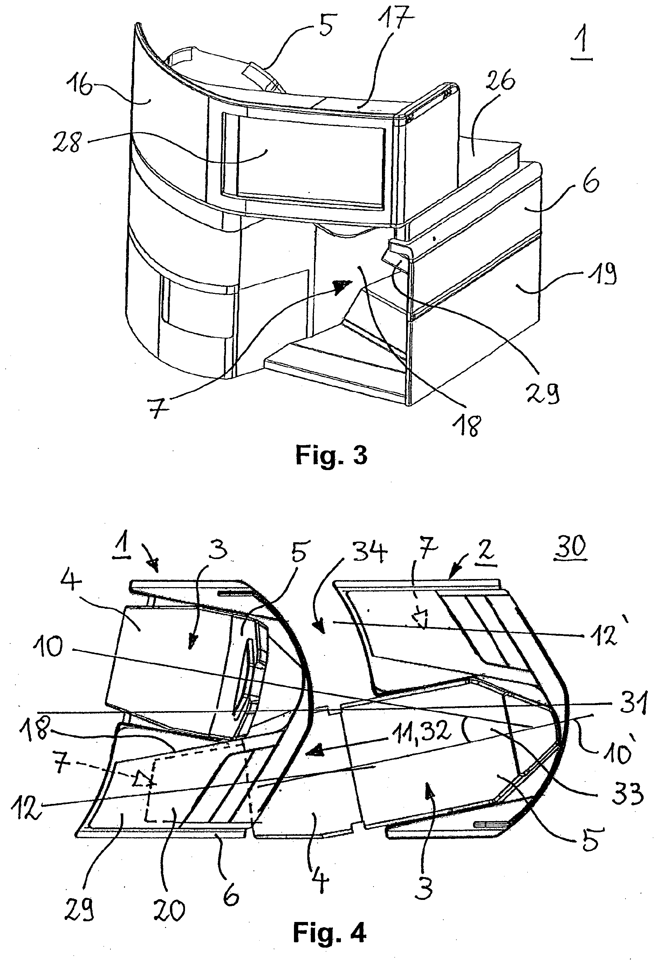

Durch die Anordnung der Konsole 6 und des darin gebildeten Fußraums 7 seitlich neben dem Sitzbereich 3 kann bei einer Stapelung von Flugzeugsitzen 1 entlang einer Stapelachse (siehe FIG 4, Bezugszeichen 31) eine hohe Dichte an Flugzeugsitzen 1 erzielt werden. Der von einem hinteren Passagier jeweils benötigte Bein- bzw. Fußraum ist teilweise bzgl. der Stapelachse 31 in einem Bereich seitlich neben einem vorderen Flugzeugsitz 1 angeordnet.

Weiter wird aus FIG 1 ersichtlich, dass der Sitzbereich 3 und der Fußraum 7 des Flugzeugsitzes 1 zueinander gewinkelt angeordnet sind, wobei die Sitzlängsachse 10 und die Fußraumlängsachse 12 zueinander einen in Blickrichtung 9 nach vorne geöffneten Winkel 14 bilden. Durch die Abwinklung von Sitzbereich 3 und Fußraum 7 ist die Projektion ihrer entsprechenden Längen auf eine Stapelachse 31 verkürzt, so dass hierdurch die Dichte an Flugzeugsitzen 1 erhöht werden kann.

In FIG 1 wird zugleich erkennbar, dass sich durch die gezeigte Abwinklung, wobei die Fußraumlängsachse 12 und die Sitzlängsachse 10 einen in Blickrichtung nach vorne geöffneten Winkel 14 bilden, im Sitzbereich 3 ein großer Freiraum für den Passagier ergibt. In Blickrichtung 9 nach vorne entfernt sich der Fußraum 7 vom Sitzbereich 3. Durch die entsprechende Ausgestaltung der Konsole 6 kann insbesondere im Bereich der Sitzfläche 4 beispielsweise ein großer Armfreiraum geschaffen werden. Der Fußraum 7 und der Sitzbereich 3 sind zueinander keilförmig angeordnet. Der Keilwinkel 14 ist in Blickrichtung 9 nach vorne geöffnet.

In Blickrichtung 9 hinter der Rückenlehne 5 ist eine in etwa bogenförmige vertikal ausgerichtete Rückwand 16 angeordnet. Die Rückwand 16 erstreckt sich mit einem Brückenbereich 17 seitlich vom Sitzbereich 3 über die Konsole 6 hinweg. Die Rückwand 16 verhindert insbesondere, dass ein Passagier des Flugzeugsitzes 1 Einsicht in einen hinteren Fußraum erhält. Die Rückwand 16 schafft für den Passagier des Flugzeugsitzes 1 eine Privatsphäre.

In der Aufsicht auf den Flugzeugsitz 1 gemäß FIG 1 ist die Oberseite der Konsole 6 erkennbar. Die sichtbaren Begrenzungslinien der Oberseite der Konsole 6 entsprechen, wie aus den FIG 2 und 3 ersichtlich werden wird, in etwa dem Verlauf der darunter angeordneten Begrenzungswände des Fußraums 7. Der Fußraum 7 wird insofern durch eine schrägverlaufende Innenwand 18 und durch eine schrägverlaufende Außenwand 19 begrenzt. Dabei bilden sowohl die Innenwand 18 als auch die Außenwand 19 des Fußraums 7 zur Sitzlängsachse 10 jeweils einen in Blickrichtung 9 nach vorne geöffneten Winkel. Die Innenwand 18 und die Außenwand 19 laufen in Blickrichtung 9 nach vorne unter Verjüngung des Fußraums 7 aufeinander zu.

Aus der perspektivischen Darstellung des Flugzeugsitzes 1 entsprechend FIG 2 von vorne wird erkennbar, dass der Sitzbereich 3 mit einer Liegefunktionalität ausgebildet ist. In der gezeigten aufrechten Sitzposition des Sitzbereichs 3 ist vor der Sitzfläche 4 eine eingeklappte Beinauflage 20 angeordnet. Bei Umfunktionalisierung des Sitzbereichs 3 erweitert sich die Sitzfläche 4 unter Horizontalstellung der Beinauflage 20 zu einer vergrößerten Liegefläche. Zugleich wird die Rückenlehne 5 aus der dargestellten aufrechten Position in eine etwa horizontale Liegeposition verfahren. In Liegeposition ist damit eine einheitliche Liegefläche durch die umgeklappte Beinauflage 20, durch die Sitzfläche 4 und durch die umgeklappte Rückenlehne 5 gebildet. Am oberen Ende der Rückenlehne 5 ist eine verstellbare Kopfstütze 21 angeordnet.

In der perspektivischen Darstellung des Flugzeugsitzes 1 gemäß FIG 2 ist die Lage der den Fußraum 7 (siehe FIG 1) nach innen zum Sitzbereich 3 abgrenzenden Innenwand 18 strichliert dargestellt. Die Innenwand 18 bildet sowohl für den Fußraum 7 als auch für den Sitzbereich 3 in Teilbereichen jeweils die Begrenzungsfläche.

Oberhalb der Konsole 6 ist an der Vorderseite der Rückwand 16 ein Ablagebereich 22 für den Passagier des Flugzeugsitzes 1 angeordnet. In dem sich durch die Abwinklung des Fußraums 7 gegenüber dem Sitzbereich 3 nach vorne ergebenden Raum ist seitlich und unterhalb der Sitzfläche 4 bzw. zwischen einem Sitzunterbau und dem Fußraum 7 ein Staufach 23 eingebracht. In einem darüber liegenden Teilbereich 24 erstreckt sich ein Armfreiraum seitlich bis zur Innenwand 18, die zugleich eine Begrenzungsfläche für den Fußraum 7 der Konsole 6 bildet. Oberhalb dieses Teilbereichs 24 ist an der Konsole 6 eine Armauflage 25 montiert. Auf der Oberseite der Konsole 6 ist weiter ein ebener Abstellbereich 26 gebildet. Auf der der Konsole 6 abgewandten Seite des Sitzbereichs 3 ist ebenfalls eine Armauflage 25 vorgesehen. Die beiden Armauflagen 25 befinden sich auf derselben Höhe.

Der Sitzbereich 3 und die Konsole 6 sind auf einem gemeinsamen Grundrahmen 27 montiert und hierüber fest miteinander verbunden. Auf dem Grundrahmen 27 ist zugleich eine nicht dargestellte Sitzkinematik befestigt, die zu einer Verstellung der Sitzfläche 4, der Beinauflage 20 und der Rückenlehne 5 ausgebildet ist. Insbesondere dient die Sitzkinematik zu einer Verstellung des Sitzbereichs 3 zwischen der dargestellten Sitzposition und einer Liegeposition.

Aus FIG 3, die den Flugzeugsitz 1 in einer perspektivischen Ansicht von hinten zeigt, wird weiter ersichtlich, dass auf der in Blickrichtung 9 hinteren Seite der Rückwand 16 im Brückenbereich 17 eine großformatige Anzeigeeinheit 28 angeordnet ist. Die Anzeigeeinheit 28 ist im Brückenbereich 17 schwenkbar montiert und erstreckt sich fast über die gesamte Fläche des Brückenbereichs 17.

Im Inneren des Fußraums 7 wird die Innenwand 18 erkennbar, die den Fußraum 7 nach innen zum Sitzbereich 3 abgrenzt. Nach außen ist der Fußraum 7 der Konsole 6 durch die Außenwand 19 begrenzt. Im Fußraum 7 ist des Weiteren eine Fußauflage 29 angeordnet, die für einen hinteren Passagier nutzbar ist. Im Falle der Liegefunktionalität koppelt die aus FIG 2 erkennbare Beinauflage 20 eines hinteren Flugzeugsitzes 1 an die in FIG 3 erkennbare Fußauflage 29 an.

In FIG 4 ist in einer Aufsicht eine Flugzeugsitzanordnung 30 mit einem ersten Flugzeugsitz 1 entsprechend FIG 2 und mit einem hierzu spiegelbildlich ausgebildeten zweiten Flugzeugsitz 2 dargestellt. Die Stapelachse 31 der gezeigten Flugzeugsitzanordnung 30 ist als eine Mittenachse eingezeichnet. Die Stapelachse 31 stellt zugleich eine Symmetrieachse dar. Durch eine Gleitspiegeloperation entlang der Stapelachse 31 lassen sich der erste Flugzeugsitz 1 und der zweite Flugzeugsitz 2 ineinander überführen. Ausgenommen hiervon sind natürlich Detailelemente wie Zierelemente, Befestigungselemente und dergleichen.

Der mit Bezug auf die Blickrichtung 9 hintere zweite Flugzeugsitz 2 ist bis auf die spiegelbildliche Konstruktion entsprechend dem ersten Flugzeugsitz 1 aufgebaut. Durch den spiegelbildlichen Aufbau sind die Positionen von Sitzbereich 3 und Fußraum 7 im ersten Flugzeugsitz 1 und im zweiten Flugzeugsitz 2 getauscht. Es wird erkennbar, dass der Sitzbereich 3 des zweiten Flugzeugsitzes 2 hinter dem Fußraum 7 des ersten Flugzeugsitzes 1 angeordnet ist. Die Konsole 6 bzw. der Fußraum 7 des zweiten Flugzeugsitzes 2 befindet sich hinter dem Sitzbereich 3 des ersten Flugzeugsitzes 1. Durch diese Anordnung wird es möglich, dass ein Passagier des hinteren zweiten Flugzeugsitzes 2 den in der Konsole 6 des ersten Flugzeugsitzes 1 gebildeten Fußraum 7 nutzen kann. Insbesondere fällt infolge des spiegelbildlichen Aufbaus der Flugzeugsitze 1, 2 die Sitzlängsachse 10' des Sitzbereichs 3 des hinteren Flugzeugsitzes 2 in etwa mit der Fußraumlängsachse 12 des vorderen Flugzeugsitzes 1 zusammen. Die Sitzlängsachsen 12, 12' und die Fußraumlängsachsen 10, 10' des vorderen Flugzeugsitzes 1 und des hinteren Flugzeugsitzes 2 bilden zueinander und zur Stapelachse 31 jeweils einen in Blickrichtung nach vorne geöffneten Winkel. Der Winkel 33 zwischen der Sitzlängsachse 10' des hinteren zweiten Flugzeugsitzes 2 und der Sitzlängsachse 10 des vorderen ersten Flugzeugsitzes 1 ist eingezeichnet.

Der Sitzbereich 3 des hinteren zweiten Flugzeugsitzes 2 ist in seiner Liegeposition dargestellt. Die Ausfahrrichtung 32 des Sitzbereichs 3 in eine Liegeposition fällt mit der Einführrichtung 11 des Fußraumes 7 des ersten Flugzeugsitzes 1 zusammen. Die Einführrichtung 11 erstreckt sich hierbei parallel zur Innenwand 18, die den Fußraum 7 vom Sitzbereich 3 trennt. Die horizontal umgeklappte Beinauflage 20 des zweiten Flugzeugsitzes 2 erstreckt sich in den Fußraum 7 der Konsole 6 des ersten Flugzeugsitzes 1 hinein. Dabei koppelt die Beinauflage 20 unmittelbar an die dortige Fußauflage 29 an. Es wird ersichtlich, dass die Beinauflage 20 des zweiten Flugzeugsitzes 2 in ihrer Geometrie der Geometrie des Fußraums 7 des ersten Flugzeugsitzes 1 entspricht. Aufgrund der symmetrischen Ausgestaltung der Flugzeugsitze 1, 2 zeigt damit die Beinauflage 20 des zweiten Flugzeugsitzes 2 zur Querschnittsfläche des Fußraums 7 des zweiten Flugzeugsitzes 2, also desselben Flugzeugsitzes 2, eine Gleitspiegelsymmetrie.

An der Flugzeugsitzanordnung 30 gemäß FIG 4 wird insbesondere auch erkennbar, dass sich für einen Passagier des zweiten Flugzeugsitzes 2 in Blickrichtung vor der Konsole 6 ein Durchgangsbereich 34 ergibt, der unabhängig von der Umgestaltung der Sitzbereiche 3 in ihrer jeweiligen Liegeposition ist.

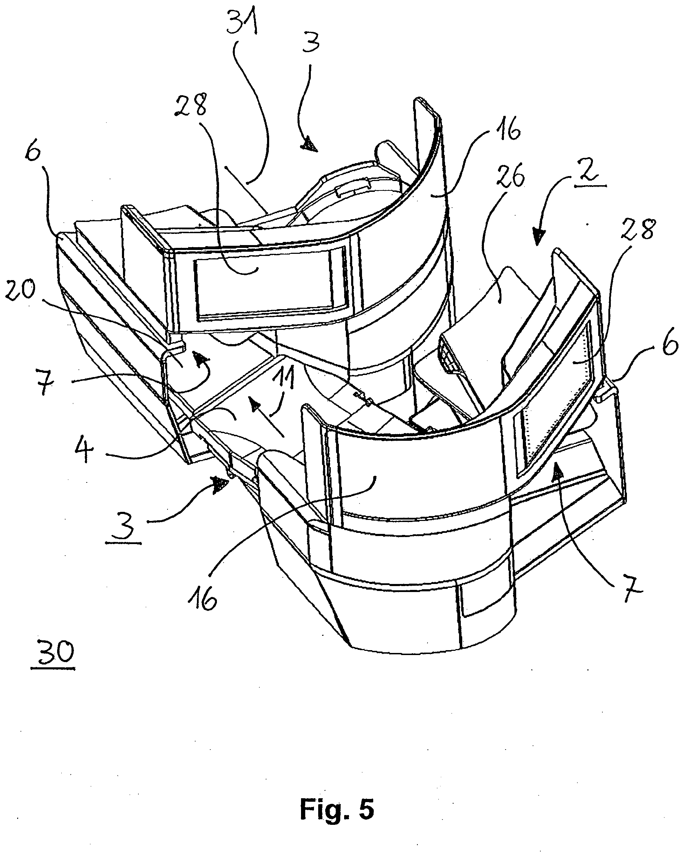

In FIG 5 ist die Flugzeugsitzanordnung 30 entsprechend FIG 4 in einer perspektivischen Darstellung gezeigt. Man erkennt hierbei im Detail die jeweils in den Rückwänden 16 eingebrachten Anzeigeeinheiten 28. Es wird auch erkennbar, wie sich die Beinauflage 20 des Sitzbereichs 3 des hinteren Flugzeugsitzes 2 in den Fußraum 7 des ersten Flugzeugsitzes 1 hinein erstreckt. Am hinteren Flugzeugsitz 2 wird der Abstellbereich 26 auf der Konsole 6 ersichtlich.

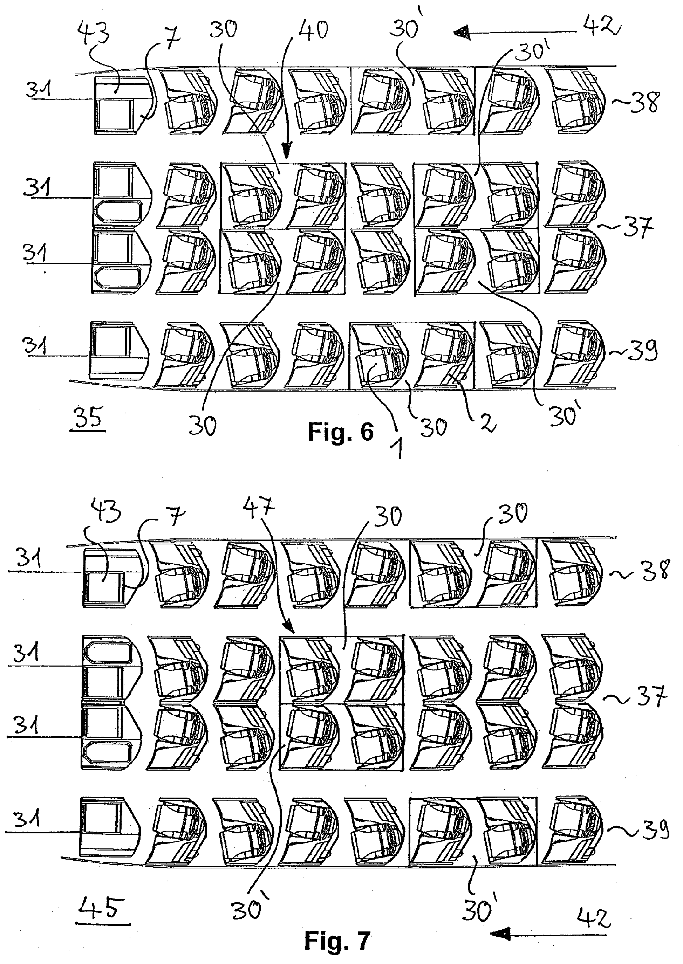

In den FIG 6 bis 8 sind jeweils schematisch unterschiedliche Flugzeugsitzkonfigurationen 35, 45 bzw. 55 dargestellt. Jede Flugzeugsitzkonfiguration 35, 45 und 55 umfasst hierbei eine Mehrzahl von Flugzeugsitzen 1, 2 bzw. von Flugzeugsitzanordnungen 30 entsprechend FIG 4 bzw. von Flugzeugsitzanordnungen 30', wobei gegenüber der Flugzeugsitzanordnung 30 entlang der jeweiligen Stapelachse 31 die Positionen von erstem und zweitem Flugzeugsitz 1, 2 getauscht sind. Die Flugzeugsitze 1, 2 sind dabei jeweils in einer Mittenreihe 37 und in zwei seitlichen Reihen 38 und 39 entlang den jeweiligen Stapelachsen 31 angeordnet. Die Reihen 37, 38, 39 sind jeweils durch Gänge voneinander getrennt. Die Flugzeuglängsachse 42 ist eingezeichnet.

Die Flugzeugsitzkonfiguration 35 umfasst in ihrer Mittenreihe 37 eine Anzahl von Flugzeugsitzreihungen 40, die jeweils aus bzgl. der jeweiligen Stapelachse 31 nebeneinander angeordneten Flugzeugsitzanordnungen 30 bzw. 30' zusammengesetzt sind. Dabei sind die beiden Flugzeugsitzanordnungen 30 bzw. 30' der Mittenreihe 37 jeweils bezüglich der Position von Sitzbereich und Konsole baugleich ausgeführt. Auch die beiden seitlichen Reihen 38, 39 sind durch eine Mehrzahl von entlang der Stapelachse 31 aufgereihten Flugzeugsitzanordnungen 30 bzw. 30' gebildet. Am vorderen Ende der dargestellten Flugzeugsitzkonfiguration 35 sind einzelne Frontelemente 43 positioniert, die jeweils einen Fußraum 7 für die Passagiere der vorderen Flugzeugsitze bilden. Zugleich wird durch die Frontelemente 43 eine Ablagemöglichkeit für Passagiere und Personal des Flugzeugs geschaffen. Die Ablagemöglichkeiten sind beispielsweise als Ablagefächer, als Staufächer oder als Schrankelemente ausgebildet. Bevorzugt ist durch die Frontelemente 43 ein vorgesehener Platz zur Installation einer Säuglings- bzw. Babyliege umfasst.

Durch die jeweils gleiche Ausgestaltung der in der Mittenreihe 37 nebeneinander angeordneten Flugzeugsitzanordnungen 30 bzw. 30' sind dort die jeweiligen Sitzbereiche jeweils durch Konsolen voneinander beabstandet. Jeder Passagier der Mittenreihe 37 hat seine eigene Privatsphäre.

Die Flugzeugsitzkonfiguration 45 gemäß FIG 7 unterscheidet sich von der Flugzeugsitzkonfiguration 35 entsprechend FIG 6 dadurch, dass sämtliche Flugzeugsitze bzgl. einer zentralen Mittenachse zueinander spiegelsymmetrisch angeordnet bzw. ausgebildet sind.

Entsprechend umfasst die Mittenreihe 37 eine Anzahl von Flugzeugsitzreihungen 47, die aus einer ersten Flugzeugsitzanordnung 30 und aus einer seitlich daneben angeordneten Flugzeugsitzanordnung 30' bestehen. Entsprechend sind die ersten und die zweiten Flugzeugsitze 1, 2 der Flugzeugsitzanordnung 30 und der Flugzeugsitzanordnung 30' jeweils spiegelsymmetrisch zueinander ausgebildet. Es wird ersichtlich, dass in der Mittenreihe 37 abwechselnd die Sitzbereiche und die Konsolen unmittelbar aneinander grenzen. Dies hat den Vorteil, dass sich zwei Passagiere - falls gewünscht - während des Fluges eine gemeinsame Privatsphäre teilen können. Die seitliche Reihe 39 umfasst ebenfalls eine Anzahl von Flugzeugsitzanordnungen 30'.

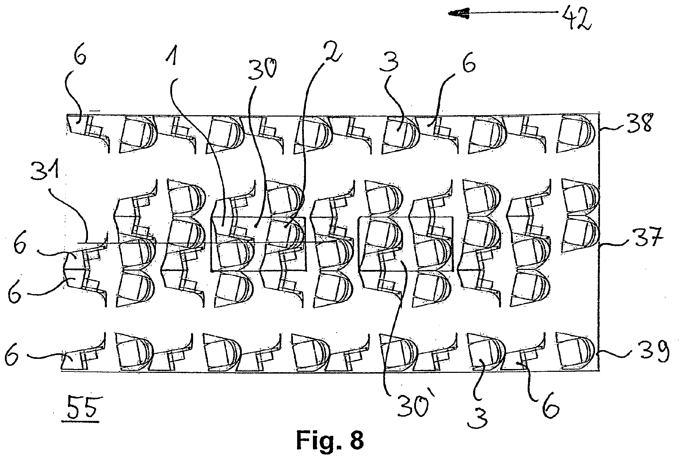

Auch in der Flugzeugsitzkonfiguration 55 entsprechend FIG 8 sind die beiden seitlichen Reihen 38 und 39 mit bzgl. einer zentralen Symmetrieachse spiegelsymmetrisch angeordneten Flugzeugsitzen aufgebaut. Die Flugzeugsitze sind hierbei jeweils aus separaten Sitzbereichen 3 und Konsolen 6 gebildet. Die Mittenreihe 37 umfasst eine Anzahl von Flugzeugsitzanordnungen 30 bzw. 30', wobei bzgl. der Stapelachse 31 seitlich neben jeweils einem der Flugzeugsitze 1, 2 ein entsprechender einzelner Sitzbereich 3 bzw. eine einzelne Konsole 6 ergänzt ist. Eine jeweils sich ergebende Doppelkonsole kann von beiden Passagieren benutzt werden. Es ergeben sich jeweils Doppelsitzkonfigurationen mit einer gemeinsamen Privatsphäre, die von zwei Passagieren jeweils auch gemeinsam genutzt werden können.

**Bezugszeichenliste**

| | | | |
|---|---|---|---|
| 1,2 | Flugzeugsitz | | |
| 3 | Sitzbereich | | |
| 4 | Sitzfläche | 37 | Mittenreihe |
| 5 | Rückenlehne | 38 | erste seitliche Reihe |
| 6 | Konsole | 39 | zweite seitliche Reihe |
| 7 | Fußraum | 40, | Flugzeugsitzreihung |
| 9 | Blickrichtung | 42 | Flugzeuglängsachse |
| 10,10' | Sitzlängsachse | 47 | Flugzeugsitzreihung |
| 11 | Einführrichtung | 43 | Frontelement |
| 12,12' | Fußraumlängsachse | 35,45,55 | Flugzeugsitzkonfiguration |
| 14 | Winkel | | |
| 16 | Rückwand | | |
| 17 | Brückenbereich | | |
| 18 | Innenwand | | |
| 19 | Außenwand | | |
| 20 | Beinauflage | | |
| 21 | Kopfstütze | | |
| 22 | Ablagebereich | | |
| 23 | Staufach | | |
| 24 | Teilbereich Innenwand | | |
| 25 | Armauflage | | |
| 26 | Abstellbereich | | |
| 27 | Grundrahmen | | |
| 28 | Anzeigeeinheit | | |
| 29 | Fußauflage | | |
| 30,30' | Flugzeugsitzanordnung | | |
| 31 | Stapelachse | | |
| 32 | Ausfahrrichtung | | |
| 33 | Winkel | | |
| 34 | Querdurchgang | | |
| 35 | Flugzeugkonfiguration | | |

## Patentansprüche

1. Flugzeugsitzanordnung (30, 30') mit einem ersten Flugzeugsitz (1) mit einem eine Sitzfläche (4) und eine Rückenlehne (5) umfassenden Sitzbereich (3), der sich mit einer Blickrichtung (9) von der Rückenlehne (5) nach vorne über die Sitzfläche (4) entlang einer Sitzlängsachse (10) erstreckt, und mit einer seitlich des Sitzbereichs (3) angeordneten Konsole (6), in deren Innenraum ein entgegen der Blickrichtung (9) zur Lehnenrückseite offener Fußraum (7) ausgebildet ist, der sich mit einer Einführrichtung (11) nach vorne entlang einer Fußraumlängsachse (12) erstreckt, wobei der Sitzbereich (3) und der Fußraum (7) gewinkelt zueinander angeordnet sind, wobei die Sitzlängsachse (10) und die Fußraumlängsachse (12) zueinander einen in Blickrichtung nach vorne geöffneten Winkel aufweisen, und mit einem zweiten Flugzeugsitz (2) mit einem eine Sitzfläche (4) und eine Rückenlehne (5) umfassenden Sitzbereich (3), der sich mit einer Blickrichtung (9) von der Rückenlehne (5) nach vorne über die Sitzfläche (4) entlang einer Sitzlängsachse (10') erstreckt, und mit einer seitlich des Sitzbereichs (3) angeordneten Konsole (6), in deren Innenraum ein entgegen der Blickrichtung (9) zur Lehnenrückseite offener Fußraum (7) ausgebildet ist, der sich mit einer Einführrichtung (11) nach vorne entlang einer Fußraumlängsachse (12') erstreckt, wobei der Sitzbereich (3) und der Fußraum (7) gewinkelt zueinander angeordnet sind, wobei die Sitzlängsachse (10') und die Fußraumlängsachse (12') zueinander einen in Blickrichtung nach vorne geöffneten Winkel aufweisen, wobei im ersten Flugzeugsitz (1) und im zweiten Flugzeugsitz (2) die Positionen des Sitzbereiches (3) und der Konsole (6) getauscht sind, und wobei der zweite Flugzeugsitz (2) entlang einer Stapelachse (31) dem ersten Flugzeugsitz (1) nachfolgend derart angeordnet ist, dass die Sitzlängsachse (10') des Sitzbereiches (3) des zweiten, hinteren Flugzeugsitzes (2) auf den Fußraum (7) des ersten, vorderen Flugzeugsitzes (1) ausgerichtet ist **dadurch gekennzeichnet, dass** ein Schnittpunkt der Sitzlängsachsen (10, 10') des vorderen Flugzeugsitzes (1) und des hinteren Flugzeugsitzes (2) im Bereich des zweiten, hinteren Flugzeugsitzes (2) liegt, wobei sich für den Passagier des Flugzeugsitzes (2) in Blickrichtung vor der Konsole (6) ein Durchgangsbereich (34) ergibt, der unabhängig von der Umgestaltung der Sitzbereiche (3) in ihrer jeweiligen Liegeposition ist.

2. Flugzeugsitzanordnung (30, 30') nach einem der vorhergehenden Ansprüche, **dadurch gekennzeichnet, dass** der Fußraum (7) der Konsole (6) des jeweiligen Flugzeugsitzes (1,2) hin zum Sitzbereich (3) des jeweiligen Flugzeugsitzes (1,2) jeweils durch eine Innenwand (18) begrenzt ist, die mit der jeweiligen Sitzlängsachse (10, 10') einen in Blickrichtung (9) nach vorne geöffneten Winkel (14) bildet.

3. Flugzeugsitzanordnung (30, 30') nach Anspruch 2, **dadurch gekennzeichnet, dass** die Innenwand (18) des jeweiligen Flugzeugsitzes (1,2) zumindest abschnittsweise zugleich den Sitzbereich (3) des jeweiligen Flugzeugsitzes (1,2) zum Fußraum (7) des jeweiligen Flugzeugsitzes (1,2) hin begrenzt.

4. Flugzeugsitzanordnung (30, 30') nach Anspruch 2 oder 3, **dadurch gekennzeichnet, dass** in einem Raum zwischen der Sitzfläche (4) des jeweiligen Flugzeugsitzes (1,2) und der Innenwand (18) des jeweiligen Flugzeugsitzes (1,2) jeweils ein Staufach (23) angeordnet ist.

5. Flugzeugsitzanordnung (30, 30') nach einem der Ansprüche 2 bis 4, **dadurch gekennzeichnet, dass** sich die Innenwand (18) des jeweiligen Flugzeugsitzes (1,2) mit einem Teilbereich (24) des jeweiligen Flugzeugsitzes (1,2) jeweils in vertikaler Richtung nach oben über die Sitzfläche (4) des jeweiligen Flugzeugsitzes (1,2) hinaus erstreckt, und dass an diesem Teilbereich (24) jeweils eine Armauflage (25) angeordnet ist.

6. Flugzeugsitzanordnung (30, 30') nach einem der vorhergehenden Ansprüche, **dadurch gekennzeichnet, dass** bezüglich der Blickrichtung (9) des jeweiligen Flugzeugsitzes (1,2) hinter der Rückenlehne des jeweiligen Flugzeugsitzes (1,2) jeweils eine im Wesentlichen vertikale Rückwand (16) vorgesehen ist, die sich insbesondere bogenförmig mit einem Brückenbereich (17) des jeweiligen Flugzeugsitzes (1,2) seitlich über den Fußraum (7) des jeweiligen Flugzeugsitzes (1,2) erstreckt.

7. Flugzeugsitzanordnung (30, 30') nach Anspruch 6, **dadurch gekennzeichnet, dass** im Brückenbereich (17) der Rückwand des jeweiligen Flugzeugsitzes (1,2) oberhalb des Fußraums (7) des jeweiligen Flugzeugsitzes (1,2) jeweils eine schwenkbare Anzeigeeinheit (27) eingelassen ist.

8. Flugzeugsitzanordnung (30, 30') nach Anspruch 7, **dadurch gekennzeichnet, dass** die Anzeigeeinheit (27) des jeweiligen Flugzeugsitzes (1,2) in eingeschwenkter Position die Fläche des Brückenbereiches (17) des jeweiligen Flugzeugsitzes (1,2) zum überwiegenden Teil ausfüllt.

9. Flugzeugsitzanordnung (30, 30') nach einem der vorhergehenden Ansprüche, **dadurch gekennzeichnet, dass** der Sitzbereich (3) des jeweiligen Flugzeugsitzes (1,2) und die Konsole (6) des jeweiligen Flugzeugsitzes (1,2) jeweils über einen Grundrahmen (27) zu einer Baueinheit verbunden sind.

10. Flugzeugsitzreihung (40, 47), wobei eine erste Flugzeugsitzanordnung (30, 30') nach Anspruch 1 und eine zweite Flugzeugsitzanordnung (30, 30') nach Anspruch 1 quer zur jeweiligen Stapelachse (31) benachbart angeordnet sind.

11. Flugzeugsitzreihung (40, 47) nach Anspruch 10, wobei in den quer zur Stapelachse (31) jeweils benachbarten Flugzeugsitzen (1) der ersten Flugzeugsitzanordnung (30, 30') und der zweiten Flugzeugsitzanordnung (30, 30') die Positionen des Sitzbereiches (3) und der Konsole (6) getauscht sind.

12. Flugzeugsitzreihung (40, 47) nach Anspruch 10, wobei in den quer zur Stapelachse (31) jeweils benachbarten Flugzeugsitzen (1) der ersten Flugzeugsitzanordnung (30', 30) und der zweiten Flugzeugsitzanordnung (30, 30') die Positionen des Sitzbereiches (3) und der Konsole (6) gleich sind.

13. Flugzeugsitzkonfiguration (45, 45, 55) mit einer Mittenreihe (37), umfassend eine Anzahl von entlang einer Stapelachse (31) angeordneten Flugzeugsitzreihungen (40, 47) nach einem der Ansprüche 10 bis 12, eine quer zur Stapelachse (31) der Mittenreihe (37) versetzte erste seitliche Reihe (38), umfassend eine Anzahl von entlang einer Stapelachse (31) angeordneten Flugzeugsitzanordnungen (30, 30') nach Anspruch 1, und eine quer zur Stapelachse (31) der Mittenreihe (37) versetzte zweite seitliche Reihe (39), umfassend eine Anzahl von entlang einer Stapelachse (31) angeordneten Flugzeugsitzanordnungen (30, 30') nach Anspruch 1.

## Claims

1. Aircraft seat arrangement (30, 30') with a first aircraft seat (1) having a seat area (3) that comprises a sitting surface (4) and a backrest (5) and extends, with a direction of vision (9) from the backrest (5) frontward over the sitting surface (4), along a longitudinal seat axis (10),
and with a console (6), which is arranged to the side of the seat area (3) and in an inner space of which a foot space (7) is realised that is open counter to the direction of vision (9), toward the backrest rear side, and extends with a frontward insertion direction (11) along a longitudinal foot space axis (12),
wherein the seat area (3) and the foot space (7) are arranged at an angle to one another,
wherein the longitudinal seat axis (10) and the longitudinal foot space axis (12) include an angle that is open frontward in a direction of vision,
and with a second aircraft seat (2) having a seat area (3) that comprises a sitting surface (4) and a backrest (5) and extends, with a direction of vision (9) from the backrest (5) frontward over the sitting surface (4), along a longitudinal seat axis (10'),
and with a console (6), which is arranged to the side of the seat area (3) and in an inner space of which a foot space (7) is realised that is open counter to the direction of vision (9), toward the backrest rear side, and extends with a frontward insertion direction (11) along a longitudinal foot space axis (12'),
wherein the seat area (3) and the foot space (7) are arranged at an angle to one another,
wherein the longitudinal seat axis (10') and the longitudinal foot space axis (12') include an angle that is open frontward in a direction of vision (9),
wherein the positions of the seat area (3) and of the console (6) are interchanged in the first aircraft seat (1) and in the second aircraft seat (2),
and wherein the second aircraft seat (2) is arranged, following the first aircraft seat (1) along a stacking axis (31), in such a way that the longitudinal seat axis (10') of the seat area (3) of the second, rear aircraft seat (2) is oriented toward the foot space (7) of the first, front aircraft seat (1),
**characterised in that** an intersection point of the longitudinal seat axes (10, 10') of the front aircraft seat (1) and of the rear aircraft seat (2) is located in the region of the second, rear aircraft seat (2),
wherein for a passenger of the aircraft seat (2), in a direction of vision (9) in front of the console (6), a pass-through space (34) results, which is independent from a reconfiguration of the seat areas (3) in their respective reclining position.

2. Aircraft seat arrangement (30, 30') according to one of the preceding claims, **characterised in that** the foot space (7) of the console (6) of each aircraft seat (1, 2) is respectively delimited toward the seat area (3) of the respective aircraft seat (1, 2) by an inner wall (18) forming an angle (14), which is open in the direction of vision (9) frontward, with the respective longitudinal seat axis (10, 10').

3. Aircraft seat arrangement (30, 30') according to claim 2, **characterised in that** the inner wall (18) of the respective aircraft seat (1, 2) at least section-wise delimits the seat area (3) of the respective aircraft seat (1, 2) toward the foot space (7) of the respective aircraft seat (1, 2).

4. Aircraft seat arrangement (30, 30') according to claim 2 or 3, **characterised in that** respectively one stowage compartment (23) is arranged in a space between the sitting surface (4) of the respective aircraft seat (1, 2) and the inner wall (18) of the respective aircraft seat (1, 2).

5. Aircraft seat arrangement (30, 30') according to one of claims 2 to 4, **characterised in that** the inner wall (18) of the respective aircraft seat (1, 2) respectively extends, with a partial region (24) of the respective aircraft seat (1, 2), in a vertical direction upwards beyond the sitting surface (4) of the respective aircraft seat (1, 2), and that respectively one armrest (25) is arranged on this partial region (24).

6. Aircraft seat arrangement (30, 30') according to one of the preceding claims, **characterised in that** respectively one substantially vertical rear wall (16) is provided, with respect to the direction of vision (9) of the respective aircraft seat (1, 2), behind a backrest of the respective aircraft seat (1, 2), said rear wall (16) in particular extending in an arc shape, with a bridge region (17) of the respective aircraft seat (1, 2), laterally over the foot space (7) of the respective aircraft seat (1, 2).

7. Aircraft seat arrangement (30, 30') according to claim 6, **characterised in that** respectively one pivotable display unit (27) is inserted in the bridge region (17) of the rear wall of the respective aircraft seat (1, 2), above the foot space (7) of the respective aircraft seat (1, 2).

8. Aircraft seat arrangement (30, 30') according to claim 7, **characterised in that** the display unit (27) of the respective aircraft seat (1, 2) fills, in a pivoted-inward position, the area of the bridge region (17) of the respective aircraft seat (1, 2) to a large extent.

9. Aircraft seat arrangement (30, 30') according to one of the preceding claims, **characterised in that** the seat area (3) of the respective aircraft seat (1, 2) and the console (6) of the respective aircraft seat (1, 2) are connected, via a base frame (27) respectively, to form a structural unit.

10. Aircraft seat sequence (40, 47),
wherein a first aircraft seat arrangement (30, 30') according to claim 1 and a second aircraft seat arrangement (30, 30') according to claim 1 are arranged adjacently to one another and transversely to the respective stacking axis (31).

11. Aircraft seat sequence (40, 47) according to claim 10,
wherein the positions of the seat area (3) and of the console (6) are interchanged in the aircraft seats (1) of the first aircraft seat arrangement (30, 30') and of the second aircraft seat arrangement (30, 30'), which are respectively adjacent to one another transversely to the stacking axis (31).

12. Aircraft seat sequence (40, 47) according to claim 10,
wherein the positions of the seat area (3) and of the console (6) are identical in the aircraft seats (1) of the first aircraft seat arrangement (30, 30') and of the second aircraft seat arrangement (30, 30'), which are respectively adjacent to one another transversely to the stacking axis (31).

13. Aircraft seat configuration (45, 55)
with a middle row (37) comprising
a plurality of aircraft seat sequences (40, 47) according to one of claims 10 to 12, which are arranged along a stacking axis (31),
with a first lateral row (38) that is offset transversely to the stacking axis (31) of the middle row (37) and comprises a plurality of aircraft seat arrangements (30, 30') according to claim 1, which are arranged along a stacking axis (31),
and with a second lateral row (39) that is offset transversely to the stacking axis (31) of the middle row (37) and comprises a plurality of aircraft seat arrangements (30, 30') according to claim 1, which are arranged along a stacking axis (31).

## Revendications

1. Agencement de sièges d'avion (30, 30')
avec un premier siège d'avion (1) ayant une zone assise (3), qui comporte une surface assise (4) et un dossier (5) et s'étend, avec une direction de visée (9) du dossier (5) en avant à travers la surface assise (4), le long d'un axe longitudinal de siège (10),
et avec une console (6) disposé à côté de la zone assise (3), dans un espace intérieur de laquelle un espace-pieds (7) est réalisé, qui est ouvert, contre à la direction de visée (9), vers un côté arrière du dossier et qui s'étend en avant, avec une direction d'insertion (11), le long d'un axe longitudinal de l'espace-pieds (12), la zone assise (3) et l'espace-pieds (7) étant agencés à angle l'un par rapport à l'autre,
l'axe longitudinal de siège (10) et l'axe longitudinal de l'espace-pieds (12) incluant un angle, qui est ouvert vers l'avant, en direction de la visée (9),
et avec un deuxième siège d'avion (2) ayant une zone assise (3), qui comporte une surface assise (4) et un dossier (5) et s'étend, avec une direction de visée (9) du dossier (5), en avant à travers la surface assise (4), le long d'un axe longitudinal de siège (10'),
et avec une console (6) disposé à côté de la zone assise (3), dans un espace intérieur de laquelle un espace-pieds (7) est réalisé, qui est ouvert, contre à la direction de visée (9), vers un côté arrière du dossier et qui s'étend en avant, avec une direction d'insertion (11), le long d'un axe longitudinal de l'espace-pieds (12'),
la zone assise (3) et l'espace-pieds (7) étant agencés à angle l'un par rapport à l'autre,
l'axe longitudinal de siège (10') et l'axe longitudinal de l'espace-pieds (12') incluant un angle, qui est ouvert vers l'avant, en direction de la visée (9),
où les positions de la zone assise (3) et de la console (6) étant interchangées dans le premier siège d'avion (1) et le deuxième siège d'avion (2),
et où le deuxième siège d'avion (2) est agencé, suivant le premier siège d'avion (1), le long d'un axe d'empilage (31) de telle manière que l'axe longitudinal de siège (10') de la zone assise (3) du deuxième siège d'avion arrière (2) est orienté vers l'espace-pieds (7) du premier siège d'avion avant (1),
**caractérisé en ce qu'**un point d'intersection des axes longitudinaux de sièges (10, 10') du siège d'avion avant (1) et du siège d'avion arrière (2) est situé dans la région du deuxième siège d'avion arrière (2),
une zone de passage (34) résultant pour le passager du siège d'avion (2) devant la console (6) dans la direction de visée (9), ledit zone de passage (34) étant indépendant d'une reconfiguration des zones assises (3) dans leur respective position couchée.

2. Agencement de sièges d'avion (30, 30') selon l'une quelconque des revendications précédentes, **caractérisé en ce que**, vers la zone assise (3) du siège d'avion respectif (1, 2), l'espace-pieds (7) de la console (6) du siège d'avion respectif (1, 2) est respectivement délimité par une paroi intérieure (18), qui inclue avec l'axe longitudinal de siège respectif (10, 10') un angle (14) ouvert vers l'avant dans la direction de visée (9).

3. Agencement de sièges d'avion (30, 30') selon la revendication 2, **caractérisé en ce que** la paroi intérieure (18) du siège d'avion respectif (1, 2) délimite au moins par sections la zone assise (3) du siège d'avion respectif (1, 2) vers l'espace-pieds (7) du siège d'avion respectif (1, 2).

4. Agencement de sièges d'avion (30, 30') selon l'une quelconque des revendications 2 ou 3, **caractérisé en ce que** dans un espace entre la surface assise (4) du siège d'avion respectif (1, 2) et la paroi intérieure (18) du siège d'avion respectif (1, 2), respectivement un compartiment de rangement (23) est disposé.

5. Agencement de sièges d'avion (30, 30') selon l'une quelconque des revendications 2 à 4, **caractérisé en ce que** la paroi intérieure (18) du siège d'avion respectif (1, 2) s'étend, avec une zone partielle (24) du siège d'avion respectif (1, 2), respectivement dans une direction verticale en haut, au-delà de la surface assise (4) du siège d'avion respectif (1, 2),
et qu'à ladite zone partielle (24) respectivement un appuie-bras (25) est disposé.

6. Agencement de sièges d'avion (30, 30') selon l'une quelconque des revendications précédentes, **caractérisé en ce qu**', en regard de la direction de visée (9) du siège d'avion respectif (1, 2), respectivement une paroi arrière sensiblement verticale (16) est prévue derrière le dossier du siège d'avion respectif (1, 2), ladite paroi arrière (16) s'étendant, en particulier, avec une zone de pont (17) du siège d'avion respectif (1, 2), en forme d'arc, latéralement au-dessus d'un espace-pieds (7) du siège d'avion respectif (1, 2).

7. Agencement de sièges d'avion (30, 30') selon la revendication 6, **caractérisé en ce que**, dans la zone de pont (17) de la paroi arrière du siège d'avion respectif (1, 2), au-dessus de l'espace-pieds (7) du siège d'avion respectif (1, 2), respectivement une unité d'affichage pivotable (27) est insérée.

8. Agencement de sièges d'avion (30, 30') selon la revendication 7, **caractérisé en ce que** l'unité d'affichage (27) du siège d'avion respectif (1, 2) rempli, dans sa position pivotée vers l'intérieur, en grande partie la superficie de la zone de pont (17) du siège d'avion respectif (1, 2).

9. Agencement de sièges d'avion (30, 30') selon l'une quelconque des revendications précédentes, **caractérisé en ce que** la zone assise (3) du siège d'avion respectif (1, 2) et la console (6) du siège d'avion respectif (1, 2) sont raccordée, réalisant une unité structurelle, respectivement par le biais d'un cadre de base (27).

10. Séquence de sièges d'avion (40, 47),
où un premier agencement de sièges d'avion (30, 30') selon la revendication 1 et un deuxième agencement de sièges d'avion (30, 30') selon la revendication 1 sont agencés avoisinant transversalement à l'axe d'empilage respectif (31).

11. Séquence de sièges d'avion (40, 47) selon la revendication 10,
où, dans les sièges d'avion (1) du premier agencement de sièges d'avion (30, 30') et du deuxième agencement de sièges d'avion (30, 30'), qui sont respectivement avoisinants transversalement à l'axe d'empilage (31), les positions de la zone assise (3) et de la console (6) sont interchangées.

12. Séquence de sièges d'avion (40, 47) selon la revendication 10,
où, dans les sièges d'avion (1) du premier agencement de sièges d'avion (30, 30') et du deuxième agencement de sièges d'avion (30, 30'), qui sont respectivement avoisinants transversalement à l'axe d'empilage (31), les positions de la zone assise (3) et de la console (6) sont identiques.

13. Configuration de sièges d'avion (45, 45, 55) avec une rangée centrale (37) comprenant un nombre des séquences de sièges d'avion (40, 47) selon l'une quelconque des revendications 10 à 12, qui sont agencés le long d'un axe d'empilage (31),
une première rangée latérale (38) transversalement à l'axe d'empilage (31) de la rangée centrale (37) et comportant un nombre des agencements de sièges d'avion (30, 30') selon la revendication 1, qui sont agencés le long d'un axe d'empilage (31),
et une deuxième rangée latérale (39) décalée transversalement à l'axe d'empilage (31) de la rangée centrale (37) et comportant un nombre d'agencements de sièges d'avion (30, 30') selon la revendication 1, qui sont agencés le long d'un axe d'empilage (31).
